# EUROPEAN PATENT APPLICATION

(11) **EP 3 623 351 A1**
(43) Date of publication of application: **18.03.2020**
(21) Application number: 18204657.3
(22) Date of filing: 06.11.2018
(51) Int. Cl.: C03C 17/30, A47J 43/00

(54) **ANTI-SLIP SALAD BOWL AND METHOD FOR MANUFACTURING THE SAME**

(30) Priority: 17.09.2018 CN 201811081987
(71) Applicant: Foshan Shi Shunde Jetwell stainless Steel Products Limited, Foshan, Guangdong (CN)
(72) Inventor: LAM, Ngai Kin, Guangdong (CN)
(74) Representative: Becker & Kurig Partnerschaft Patentanwälte PartmbB

(57) **Abstract**

The present disclosure provides an anti-slip salad bowl which includes an enamel body. An outer bottom of the enamel body is coated with a silicone adhesive layer and a mixed silicone rubber layer. Correspondingly, the disclosure further provides a method for manufacturing the anti-slip salad bowl. On one hand, since the manufacturing is convenient and the related materials are easily available, the resultant bowl is cost effective. On the other hand, since the outer bottom of the enamel body is bonded with an anti-slip layer made of silicone rubber, silicone rubber adhesive, vulcanizing agent and color concentrate, the bowl will not be prone to slipping when moved or used to mix salad.

## Description

### TECHNICAL FIELD

The present disclosure relates to the technical filed of manufacturing bowls, and particularly relates to an anti-slip salad bowl and method for manufacturing the salad bowl.

### BACKGROUND

Salad bowls on the market may be made of stainless steel, ceramics, glasses, enamels etc. Since it is hard to bond an anti-slip base to salad bowls made of ceramics and glasses, the salad bowls made of ceramics and glasses are prone to slipping. Merely the salad bowls made of stainless steel have anti-slip bases bonded thereto. However, the stainless steel is relatively expensive and cannot form multicolor contrast with the enamel. Therefore, merchants and consumers have been looking forward to an enamel bowel with an anti-slip base.

### SUMMARY

The present disclosure provides a method for manufacturing an anti-slip salad bowl and solves the problems of the conventional salad bowls having a relatively high cost and being prone to slipping. The disclosure further provides an anti-slip salad bowl manufactured according to the method.

According to an aspect, an anti-slip salad bowl is provided. The anti-slip salad bowl includes an enamel body. An outer bottom of the enamel body is coated with a silicone adhesive layer and a mixed silicone rubber layer.

According to another aspect, a method for manufacturing an anti-slip salad bowl with an enamel body is provided. The method includes the following steps.
In Step 1, an outer bottom of the enamel body is immerged into silicone adhesive held in a container. The outer bottom is then dried to obtain an enamel bowl bonded with the silicone adhesive.
In Step 2, silicone rubber, vulcanizing agent and color concentrate are mixed to obtain mixed silicone rubber, and the mixed silicone rubber is pressed to obtain flaky mixed silicone rubber.
In Step 3, the flaky mixed silicone rubber is coated onto an outer bottom of the enamel bowl boned with the silicone adhesive obtained according to the Step 1, to obtain an enamel bowl provided with a bottom coated with the mixed silicone rubber.
In Step 4, within a mould, high temperature vulcanization is performed on the enamel bowl provided with the bottom coated with the mixed silicone rubber which is obtained in the Step 3. The enamel bowl is cleaned to obtain the anti-slip salad bowl.

According to an embodiment, in the Step 1, the silicon adhesive is at least one of One Component Room Temperature Vulcanized Silicone rubber Adhesive, One Component Heating cured Silicone rubber Adhesive or Two Component Heating cured Silicone rubber Adhesive.

According to an embodiment, the Step 2 further includes the following actions. 15∼25kg of silicone rubber, 0.1∼0.5kg of vulcanizing agent and 0.1∼0.5kg of color concentrate are mixed within a mixer to obtain mixed silicone rubber. The mixed silicone rubber is pressed to obtain flaky mixed silicone rubber.

According to an embodiment, the silicone rubber is at least one of One Component Room Temperature Vulcanized Silicone rubber, One Component Heating cured Silicone rubber or Two Component Heating cured Silicone rubber.

According to an embodiment, the mixing is performed under a temperature of 80∼90°C for 20∼30 minutes.

According to an embodiment, the flaky mixed silicone rubber has a thickness of 2∼5mm.

According to an embodiment, in the Step 2, the vulcanizing agent is in a form of transparent paste.

According to an embodiment, in the Step 3, the coated flaky mixed silicone rubber has a weight of 40∼50g.

According to an embodiment, in the Step 4, the high temperature vulcanization is performed under a temperature of 180∼220°C for 30∼60 minutes.

Compared to the conventional art, the above process of the disclosure is convenient and the related materials are easily available. On one hand, since the manufacturing is convenient and the related materials are easily available, the resultant bowl is cost effective. On the other hand, since the outer bottom of the enamel body is bonded with an anti-slip layer made of silicone rubber, silicone rubber adhesive, vulcanizing agent and color concentrate, the bowl will not be prone to slipping when moved or used to mix salad.

### DETAILED DESCRIPTION

In order to make the purposes, technical solutions and advantages of the present disclosure clearer, the disclosure will be further described below in combination with the drawings and the embodiments in detail. It should be understood that the specific embodiments described herein are only adopted to explain the application and not intended to limit the disclosure.

An embodiment of the disclosure provides a method for manufacturing an anti-slip salad bowl. The method includes the following steps.
Step 1, an outer bottom of an enamel body is immerged into silicone adhesive held in a container. Then the outer bottom is dried under a temperature of 60∼80°C for 10∼30 minutes to obtain an enamel bowl bonded with the silicone adhesive. The silicon adhesive may be at least one of One Component Room Temperature Vulcanized Silicone rubber Adhesive, One Component Heating cured Silicone rubber Adhesive or Two Component Heating cured Silicone rubber Adhesive.
Step 2, 15∼25kg of silicone rubber, 0.1∼0.5kg of vulcanizing agent and 0.1∼0.5kg of color concentrate are mixed under a temperature of 80∼90°C for 20∼30 minutes, so as to obtain mixed silicone rubber. Then the mixed silicone rubber is pressed to obtain flaky mixed silicone rubber with a thickness of 2∼5mm. The silicone rubber may be at least one of One Component Room Temperature Vulcanized Silicone rubber, One Component Heating cured Silicone rubber or Two Component Heating cured Silicone rubber. The vulcanizing agent may be in a form of transparent paste.
Step 3, 40∼50g of the flaky mixed silicone rubber is coated onto an outer bottom of the enamel bowl boned with the silicone adhesive that is obtained according to the Step 1 (the position in which the mixed silicone rubber is coated, is the position at which the silicone adhesive is bonded to the enamel bowl in Step 1), so as to obtain an enamel bowl provided with a bottom coated with the mixed silicone rubber.
Step 4, high temperature vulcanization is performed under a temperature of 180∼220°C for 30∼60 minutes, within a mould, on the enamel bowl provided with the bottom coated with the mixed silicone rubber that is obtained in the Step 3. Then the enamel bowl is cleaned to obtain the anti-slip salad bowl.

On one hand, since above process is convenient and the related materials are easily available, the resultant bowl is cost effective. On the other hand, since the outer bottom of the enamel body is bonded with an anti-slip layer made of silicone rubber, silicone rubber adhesive, vulcanizing agent and color concentrate, the bowl will not be prone to slipping when moved or used to mix salad.
First Embodiment
   Step 1, an outer bottom of an enamel body is immerged into One Component Room Temperature Vulcanized Silicone rubber Adhesive held in a container. Then the outer bottom is dried under a temperature of 70°C for 20 minutes to obtain an enamel bowl bonded with the silicone adhesive.
   Step 2, 20kg of One Component Room Temperature Vulcanized Silicone rubber, 0.2kg of vulcanizing agent and 0.2kg of color concentrate are mixed under a temperature of 85°C for 25 minutes, so as to obtain mixed silicone rubber. Then the mixed silicone rubber is pressed to obtain flaky mixed silicone rubber with a thickness of 3mm.
   Step 3, 45g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 200°C for 40 minutes, within a mould, on the enamel bowl provided with the bottom coated with the mixed silicone rubber that is obtained in the Step 3. Then the enamel bowl is cleaned to obtain the anti-slip salad bowl.
Second Embodiment
   Step 1, an outer bottom of an enamel body is immerged into One component Heating cured Silicone rubber adhesive held in a container. Then the outer bottom is dried under a temperature of 60°C for 30 minutes to obtain an enamel bowl bonded with the silicone adhesive.
   Step 2, 15kg of One Component Heating cured Silicone rubber, 0.1kg of vulcanizing agent and 0.1kg of color concentrate are mixed under a temperature of 80°C for 30 minutes, so as to obtain mixed silicone rubber. Then the mixed silicone rubber is pressed to obtain flaky mixed silicone rubber with a thickness of 2mm.
   Step 3, 40g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 180°C for 60 minutes, within a mould, on the enamel bowl provided with the bottom coated with the mixed silicone rubber that is obtained in the Step 3. Then the enamel bowl is cleaned to obtain the anti-slip salad bowl.
Third Embodiment
   Step 1, an outer bottom of an enamel body is immerged into Two Component Heating cured Silicone rubber Adhesive held in a container. Then the outer bottom is dried under a temperature of 80°C for 10 minutes to obtain an enamel bowl bonded with the silicone adhesive.
   Step 2, 25kg of Two Component Heating cured Silicone rubber, 0.5kg of vulcanizing agent and 0.5kg of color concentrate are mixed under a temperature of 90°C for 20 minutes, so as to obtain mixed silicone rubber. Then the mixed silicone rubber is pressed to obtain flaky mixed silicone rubber with a thickness of 5mm.
   Step 3, 50g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 220°C for 30 minutes, within a mould, on the enamel bowl provided with the bottom coated with the mixed silicone rubber that is obtained in the Step 3. Then the enamel bowl is cleaned to obtain the anti-slip salad bowl.
Fourth embodiment
   Step 1, an outer bottom of an enamel body is immerged into One Component Room Temperature Vulcanized Silicone rubber Adhesive held in a container. Then the outer bottom is dried under a temperature of 70°C for 20 minutes to obtain an enamel bowl bonded with the silicone adhesive.
   Step 2, 20kg of One Component Room Temperature Vulcanized Silicone rubber, 0.2kg of vulcanizing agent and 0.2kg of color concentrate are mixed under a temperature of 85°C for 25 minutes, so as to obtain mixed silicone rubber. Then the mixed silicone rubber is pressed to obtain flaky mixed silicone rubber with a thickness of 3mm.
   Step 3, 45g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 180°C for 60 minutes, within a mould, on the enamel bowl provided with the bottom coated with the mixed silicone rubber that is obtained in the Step 3. Then the enamel bowl is cleaned to obtain the anti-slip salad bowl.
Fifth Embodiment
   Step 1, an outer bottom of an enamel body is immerged into One Component Room Temperature Vulcanized Silicone rubber Adhesive held in a container. Then the outer bottom is dried under a temperature of 70°C for 20 minutes to obtain an enamel bowl bonded with the silicone adhesive.
   Step 2, 20kg of One Component Room Temperature Vulcanized Silicone rubber, 0.2kg of vulcanizing agent and 0.2kg of color concentrate are mixed under a temperature of 85°C for 25 minutes, so as to obtain mixed silicone rubber. Then the mixed silicone rubber is pressed to obtain flaky mixed silicone rubber with a thickness of 3mm.
   Step 3, 45g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 220°C for 30 minutes, within a mould, on the enamel bowl provided with the bottom coated with the mixed silicone rubber that is obtained in the Step 3. Then the enamel bowl is cleaned to obtain the anti-slip salad bowl.
Sixth Embodiment
   Step 1, an outer bottom of an enamel body is immerged into One Component Heating cured Silicone rubber Adhesive held in a container. Then the outer bottom is dried under a temperature of 60°C for 30 minutes to obtain an enamel bowl bonded with the silicone adhesive.
   Step 2, 15kg of One Component Heating cured Silicone rubber, 0.1kg of vulcanizing agent and 0.1kg of color concentrate are mixed under a temperature of 80°C for 30 minutes, so as to obtain mixed silicone rubber. Then the mixed silicone rubber is pressed to obtain flaky mixed silicone rubber with a thickness of 2mm.
   Step 3, 40g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 220°C for 40 minutes, within a mould, on the enamel bowl provided with the bottom coated with the mixed silicone rubber that is obtained in the Step 3. Then the enamel bowl is cleaned to obtain the anti-slip salad bowl.
Seventh Embodiment
   Step 1, an outer bottom of an enamel body is immerged into One Component Heating cured Silicone rubber Adhesive held in a container. Then the outer bottom is dried under a temperature of 60°C for 30 minutes to obtain an enamel bowl bonded with the silicone adhesive.
   Step 2, 15kg of One Component Heating cured Silicone rubber, 0.1kg of vulcanizing agent and 0.1kg of color concentrate are mixed under a temperature of 80°C for 30 minutes, so as to obtain mixed silicone rubber. Then the mixed silicone rubber is pressed to obtain flaky mixed silicone rubber with a thickness of 2mm.
   Step 3, 40g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 220°C for 30 minutes, within a mould, on the enamel bowl provided with the bottom coated with the mixed silicone rubber that is obtained in the Step 3. Then the enamel bowl is cleaned to obtain the anti-slip salad bowl.
Eighth Embodiment
   Step 1, an outer bottom of an enamel body is immerged into Two Component Heating cured Silicone rubber Adhesive held in a container. Then the outer bottom is dried under a temperature of 80°C for 10 minutes to obtain an enamel bowl bonded with the silicone adhesive.
   Step 2, 25kg of Two Component Heating cured Silicone rubber, 0.5kg of vulcanizing agent and 0.5kg of color concentrate are mixed under a temperature of 90°C for 20 minutes, so as to obtain mixed silicone rubber. Then the mixed silicone rubber is pressed to obtain flaky mixed silicone rubber with a thickness of 5mm.
   Step 3, 50g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 200°C for 40 minutes, within a mould, on the enamel bowl provided with the bottom coated with the mixed silicone rubber that is obtained in the Step 3. Then the enamel bowl is cleaned to obtain the anti-slip salad bowl.
Ninth Embodiment
   Step 1, an outer bottom of an enamel body is immerged into Two Component Heating cured Silicone rubber Adhesive held in a container. Then the outer bottom is dried under a temperature of 80°C for 10 minutes to obtain an enamel bowl bonded with the silicone adhesive.
   Step 2, 25kg of Two Component Heating cured Silicone rubber, 0.5kg of vulcanizing agent and 0.5kg of color concentrate are mixed under a temperature of 90°C for 20 minutes, so as to obtain mixed silicone rubber. Then the mixed silicone rubber is pressed to obtain flaky mixed silicone rubber with a thickness of 5mm.
   Step 3, 50g of the flaky mixed silicone rubber is coated onto an outer bottom of the enamel bowl boned with the silicone adhesive that is obtained according to the Step 1, so as to obtain an enamel bowl provided with a bottom coated with the mixed silicone rubber.
   Step 4, high temperature vulcanization is performed under a temperature of 180°C for 60 minutes, within a mould, on the enamel bowl provided with the bottom coated with the mixed silicone rubber that is obtained in the Step 3. Then the enamel bowl is cleaned to obtain the anti-slip salad bowl.

### Experiments

Tests regarding a pulling force (bonding force), acid resistance and alkali resistance are performed on the bases of the salad bowls obtained according to the embodiments 1 to 9. The test results are listed in Table 1 below.

**Table 1**

| | Pulling force (bonding force) | Acid resistance | Alkali resistance |
|---|---|---|---|
| First embodiment | 39.2 N | Base unchanged | Base unchanged |
| Second embodiment | 24.5 N | Base unchanged | Base unchanged |
| Third embodiment | 29.4 N | Base unchanged | Base unchanged |
| Fourth embodiment | 19.6 N | Base unchanged | Base unchanged |
| Fifth embodiment | 44.1 N | Base unchanged | Base unchanged |
| Sixth embodiment | 39.2 N | Base unchanged | Base unchanged |
| Seventh Embodiment | 39.2 N | Base unchanged | Base unchanged |
| Eighth Embodiment | 34.3 N | Base unchanged | Base unchanged |
| Nine embodiment | 29.4 N | Base unchanged | Base unchanged |
| Comparative embodiment | 14.7 N | Base changed | Base changed |

As shown in the Table 1, the anti-slip layer at the bottom of the anti-slip salad bowl according to the present disclosure, is superior over that of the conventional salad bowl in terms of the bonding force, the acid resistance and alkali resistance, and is worth to be popularized.

The abovementioned embodiments only express some implementation modes of the disclosure and are specifically described in detail and not thus understood as limits to the patent scope of the disclosure.

## Claims

1. An anti-slip salad bowl, comprising an enamel body, **characterized in that** an outer bottom of the enamel body is coated with a silicone adhesive layer and a mixed silicone rubber layer.

2. A method for manufacturing an anti-slip salad bowl with an enamel body, **characterized in that** the method comprises:
Step 1, immerging an outer bottom of the enamel body into silicone adhesive held in a container, and drying the outer bottom to obtain an enamel bowl bonded with the silicone adhesive;
Step 2, mixing silicone rubber, vulcanizing agent and color concentrate to obtain mixed silicone rubber, and pressing the mixed silicone rubber to obtain flaky mixed silicone rubber;
Step 3, coating the flaky mixed silicone rubber onto an outer bottom of the enamel bowl boned with the silicone adhesive obtained according to the Step 1, to obtain an enamel bowl provided with a bottom coated with the mixed silicone rubber; and
Step 4, performing, within a mould, high temperature vulcanization on the enamel bowl provided with the bottom coated with the mixed silicone rubber which is obtained in the Step 3, and cleaning the enamel bowl to obtain the anti-slip salad bowl.

3. The method for manufacturing an anti-slip salad bowl according to claim 2, wherein in the Step 1, the silicon adhesive is at least one of One Component Room Temperature Vulcanized Silicone rubber Adhesive, One Component Heating cured Silicone rubber Adhesive or Two Component Heating cured Silicone rubber Adhesive.

4. The method for manufacturing an anti-slip salad bowl according to claim 3, wherein the Step 2 further comprises:
mixing 15∼25kg of silicone rubber, 0.1∼0.5kg of vulcanizing agent and 0.1∼0.5kg of color concentrate within a mixer to obtain mixed silicone rubber; and pressing the mixed silicone rubber to obtain flaky mixed silicone rubber.

5. The method for manufacturing an anti-slip salad bowl according to claim 4, wherein the silicone rubber is at least one of One Component Room Temperature Vulcanized Silicone rubber, One Component Heating cured Silicone rubber or Two Component Heating cured Silicone rubber.

6. The method for manufacturing an anti-slip salad bowl according to claim 5, wherein the mixing is performed under a temperature of 80∼90°C for 20∼30 minutes.

7. The method for manufacturing an anti-slip salad bowl according to claim 6, wherein the flaky mixed silicone rubber has a thickness of 2-5mm.

8. The method for manufacturing an anti-slip salad bowl according to claim 7, wherein in the Step 2, the vulcanizing agent is in a form of transparent paste.

9. The method for manufacturing an anti-slip salad bowl according to claim 8, wherein in the Step 3, the coated flaky mixed silicone rubber has a weight of 40∼50g.

10. The method for manufacturing an anti-slip salad bowl according to any one of claims 2-9, wherein in the Step 4, the high temperature vulcanization is performed under a temperature of 180∼220°C for 30∼60 minutes.
